# EUROPEAN PATENT SPECIFICATION

(11) **EP 2 881 313 B1**
(45) Date of publication and mention of the grant of the patent: **30.01.2019**
(21) Application number: 14195609.4
(22) Date of filing: 01.12.2014
(51) Int. Cl.: B62K 19/16

(54) **Body frame structure for saddle-ride type vehicle**
Fahrwerksrahmenstruktur für ein Sattelfahrzeug
Structure de châssis de véhicule de type à selle

(30) Priority: 06.12.2013 JP 2013253318
(43) Date of publication of application: 10.06.2015
(73) Proprietor: HONDA MOTOR CO., LTD., Tokyo, 107-8556 (JP)
(72) Inventor: Shimozato, Noriya, Saitama 351-0193 (JP); Kunikiyo, Katsuhiro, Saitama 351-0193 (JP); Mizukura, Yuki, Saitama 351-0193 (JP); Sasaki, Takashi, Saitama 351-0193 (JP); Nishioka, Makoto, Saitama 351-0193 (JP)
(74) Representative: Weickmann & Weickmann PartmbB

(56) References cited:
- EP-A2- 1 254 830
- JP-A- S5 849 581

## Description

### Technical Field

The present invention relates to a body frame structure for a saddle-ride type vehicle such as a motorcycle, and more particularly, to a body frame structure for a saddle-ride type vehicle in which fiber-reinforced plastic is used for at least a portion thereof.

### Background Art

A body frame structure according to the preamble of claim 1 is known from JP S58-49581 A. In this known body frame structure a plastic rear frame is coupled to a metal front frame.

The body frame for a motorcycle disclosed in JP S58-49581 A is constructed such that the whole rear frame is formed of a synthetic resin, a portion thereof also serving as a cleaner case of an air cleaner.

### Summary of Invention

### Technical Problem

However, the body frame structure according to the above-described related art in which the whole plastic rear frame is formed into a substantially box-shape including a pair of side walls is likely to cause high product costs due to low product yields, in addition to an increase in size and complication of molding equipment for molding the rear frame.

Accordingly, an object of the present invention is to provide a body frame structure for a saddle-ride type vehicle which allows miniaturization and simplification of molding apparatus and also allows a reduction in product costs by increasing product yields:

### Solution to Problem

In a body frame structure for a saddle-ride type vehicle according to the present invention, the following constitution is adopted in order to address the above-described problem.

A feature of the invention according to Claim 1 is as follows. The body frame structure for the saddle-ride type vehicle includes: a pair of side walls (55) that are opposed to each other in a vehicle width direction; and a coupling block (41) that couples the pair of side walls (55), the pair of side walls (55) and the coupling block (41) being formed of fiber-reinforced plastic. The coupling block (41) is a cleaner case (41) that has an annularly continuous peripheral wall (61a) and boss portions (63), each of the boss portions (63) protruding toward a corresponding one of opposed surfaces of the pair of side walls (55) from an outer surface of the peripheral wall (61a). The cleaner case (41) is fastened to the pair of side walls (55) at the boss portions (63).

With this constitution, the pair of side walls (55) are supported by the peripheral wall (61a) of the cleaner case (41) through the high-stiffness boss portions (63) formed of fiber-reinforced plastic. In this constitution, each of the boss portions (63) protrudes partially toward the corresponding side wall from the outer surface of the peripheral wall (61a), thereby allowing miniaturization of the whole cleaner case (41).

A feature of the invention according to Claim 2 is that, in the body frame structure for the saddle-ride type vehicle according to Claim 1, the cleaner case (41) has a first reinforcing wall (61b or 62) that extends inwardly of an opening from one open end of the peripheral wall (61a).

With this constitution, the one open end of the peripheral wall (61a) of the cleaner case (41) is reinforced by the first reinforcing wall (61b or 62), thereby enhancing the support stiffness of the boss portions (63).

A feature of the invention according to Claim 3 is that, in the body frame structure for the saddle-ride type vehicle according to Claim 2, the cleaner case (41) has a second reinforcing wall (62 or 61b) that extends inwardly of an opening from the other open end of the peripheral wall (61a).

With this constitution, the one and the other open ends of the peripheral wall (61a) of the cleaner case (41) are reinforced by the first reinforcing wall (61b or 62) and the second reinforcing wall (62 or 61b), thereby further enhancing the support stiffness of the boss portions (63).

A feature of the invention according to Claim 4 is that, in the body frame structure for the saddle-ride type vehicle according to any one of Claims 1 to 3, each of the boss portions (63) includes: a cylindrical wall (63a) that is formed integral with the peripheral wall (61a); and a fastening piece (63b) that has a fastening portion (65) for fastening the corresponding side wall (55) and is joined to an inside of the cylindrical wall (63a).

With this constitution, even if the cleaner case (41) is formed to have a thin wall of carbon fiber reinforced plastic, the strength of the boss portion (63) is increased by the cylindrical wall (63a) and the fastening piece (63b).

A feature of the invention according to Claim 5 is that, in the body frame structure for the saddle-ride type vehicle according to any one of Claims 1 to 4, the cleaner case (41) holds a cleaner element (45) of an air cleaner (40).

With this constitution, the cleaner case serves as a portion of the body frame, thereby allowing a reduction in the number of components of the vehicle body.

A feature of the invention according to Claim 6 is that, in the body frame structure for the saddle-ride type vehicle according to any one of Claims 1 to 5, metal frames (8) are symmetrically provided on both sides in the vehicle width direction of a vehicle body; the pair of side walls (55) are connected to the symmetrical metal frames (8); and the left and right boss portions (63), each protruding toward the corresponding one of the opposed sides of the pair of side walls (55) from the outer surface of the peripheral wall (61a), are arranged at almost the same level.

With this constitution, the pair of side walls (55) are coupled to each other by the left and right boss portions (63) arranged at almost the same level and the peripheral wall (61a) interposed therebetween. Thus, when a load is applied to the body frame from the vehicle width direction, the load is input to the left and right boss portions (63) at almost the same level. This makes it less likely that distortion occurs on the left and right side walls (55) when a load is applied to the body frame from the vehicle width direction.

A feature of the invention according to Claim 7 is that, in the body frame structure for the saddle-ride type vehicle according to Claim 6, the pair of side walls (55) are connected to the metal frames (8) at front and rear positions thereof with the boss portions (63) of the cleaner case (41) interposed therebetween.

With this constitution, when a load is applied to the body frame from the vehicle width direction, the load is input without being biased toward one side of the front and rear boss portions (63) of the cleaner case (41). Therefore, distortion becomes less likely to occur on the boss portions (63) and the fastening portions when a load is applied to the body frame from the vehicle width direction.

A feature of the invention according to Claim 8 is that, in the body frame structure for the saddle-ride type vehicle according to any one of Claims 1 to 7, at least either of harnesses (66a, 66b, and 66c) and a hose (67) that are arranged substantially along the longitudinal direction of the vehicle body is disposed above the boss portions (63) between the pair of side walls (55).

With this constitution, the harnesses (66a, 66b, and 66c) and the hose (67) are arranged in the dead space above the boss portions (63), thereby facilitating the layout of the harnesses (66a, 66b, and 66c) and the hose (67) in the body frame.

### Advantageous Effects of Invention

According to the present invention, the cleaner case has the annularly continuous peripheral wall and the boss portions, each of the boss portions protruding toward a corresponding one of opposed sides of the pair of side walls from an outer surface of the peripheral wall. Also, the cleaner case is fastened to the pair of side walls at the boss portions. Thus, the pair of side walls can be supported by the high-stiffness boss portions and peripheral wall of the cleaner case, and further, the cleaner case can be made to be a compact component having the peripheral wall and the boss portions. Consequently, the apparatus for molding the body frame can be miniaturized and simplified, and product yields can be also increased.

### Brief Description of Drawings

Fig. 1 is a left side view of a vehicle according to an embodiment of the present invention.
Fig. 2 is a longitudinal sectional view of a roughly center portion in a longitudinal direction of the vehicle according to the embodiment of the present invention.
Fig. 3 is a top plan view, with portions removed, of the roughly center portion in the longitudinal direction of the vehicle according to the embodiment of the present invention.
Fig. 4 is a longitudinal sectional view of a rear frame of the vehicle according to the embodiment of the present invention.
Fig. 5 is a front view of the rear frame of the vehicle according to the embodiment of the present invention.
Fig. 6 is a top plan view of the rear frame of the vehicle according to the embodiment of the present invention.
Fig. 7 is a right side view, with a side wall removed, of the rear frame and components stored therein of the vehicle according to the embodiment of the present invention.
Fig. 8 is a sectional view of the vehicle according to the embodiment of the present invention taken along line VIII-VIII of Fig. 4.

### Description of Embodiments

Hereinafter, an embodiment of the present invention will be described with reference to the accompanying drawings. It is to be noted that, in the following description, references to directions, such as front, rear, left, and right, are made with reference to a vehicle to be described below, unless otherwise stated. It is also to be noted that, in the drawings used in the following description, there are suitably shown arrow FR indicating the front of the vehicle, arrow LH indicating the left of the vehicle, and arrow UP indicating the upper side of the vehicle.

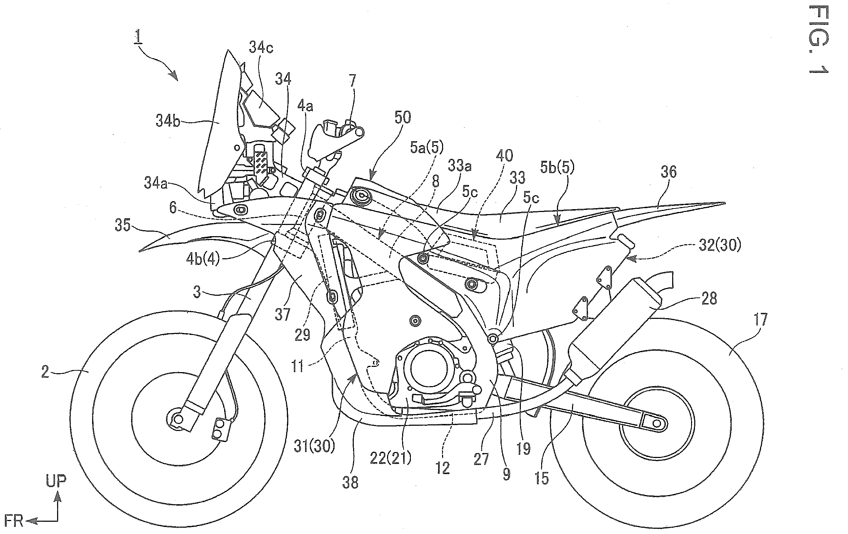

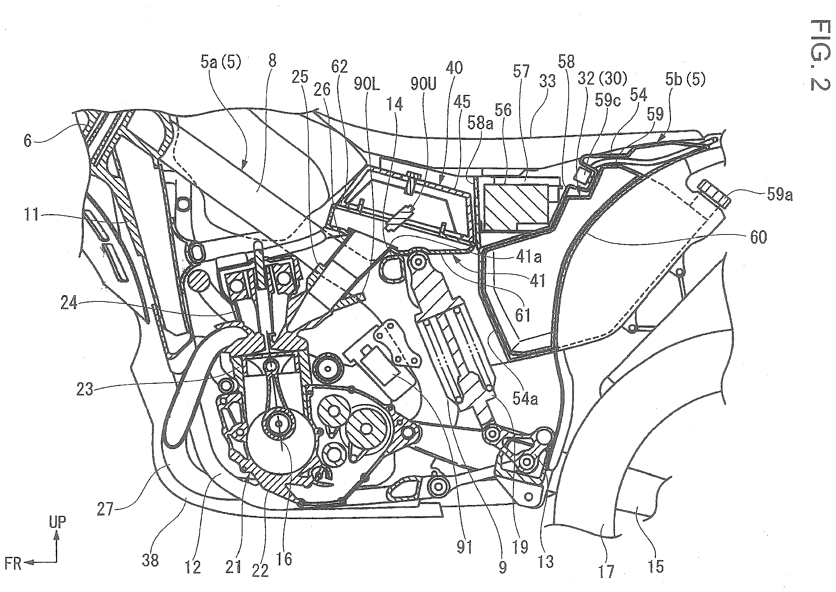

Fig. 1 shows a general construction of a saddle-ride type vehicle according to this embodiment, and Fig. 2 is a longitudinal sectional view of a center portion in a longitudinal direction of the saddle-ride type vehicle. The saddle-ride type vehicle according to this embodiment is an off-road motorcycle 1. In the motorcycle 1, a front wheel 2 is journaled to lower ends of left and right front forks 3. Upper portions of the left and right front forks 3 are steerably pivotally supported through a steering stem 4 by a head pipe 6 of a body frame 5. A steering handlebar 7 is mounted on a top bridge 4a of the steering stem 4.

The body frame 5 has a front frame 5a made of metal, such as aluminum alloy, and a rear frame 5b made of fiber-reinforced plastic, such as carbon fiber reinforced plastic. The rear frame 5b functions as a seat frame, front edge portions of the rear frame 5b being coupled to rear edge portions of the front frame 5a by a pair of front and rear fastening portions 5c.

The front frame 5a has: the head pipe 6; a pair of left and right main tubes 8 that extend downward and rearward from the head pipe 6; a pair of left and right pivot frames 9 that are connected to rear ends of the left and right main tubes 8; a single down frame 11 that extends rearward and downward from the head pipe 6 in such a manner as to form a steeper slope than the left and right main tubes 8; and a pair of left and right lower frames 12 that are split into left and right from a lower end of the down frame 11, and then extend in a rearwardly curved manner to be connected to lower ends of the left and right pivot frames 9.

A front end of a swing arm 15 is pivotally supported in a vertically swingable manner on the left and right pivot frames 9. A rear wheel 17 is journaled to a rear end of the swing arm 15. As shown in Fig. 2, a lower end of a rear cushion unit 19 is coupled to a lower front portion of the swing arm 15 through a linkage mechanism 13. An upper end of the rear cushion unit 19 is coupled to a cross member 14 that extends between the rear ends of the left and right main tubes 8.

An engine 21 serving as the motor of the motorcycle 1 is mounted inside the front frame 5a. The engine 21 is a water-cooled single-cylinder engine having a crankshaft 16 parallel to a vehicle width direction (left-right direction). A cylinder 23 is upright in a substantially vertical position on an upper front portion of a crankcase 22 forming a lower portion of the engine 21. A cylinder head 24 is fixedly installed on the cylinder 23. A rear portion of the crankcase 22 also serves as a transmission case. An output shaft (not shown) of the transmission protrudes laterally from a rear portion of the crankcase 22 and is associated with the rear wheel 17 by a chain transmission mechanism (not shown).

An intake system of the engine 21 is connected to the rear of the cylinder head 24, and an exhaust system of the engine 21 is connected to the front of the cylinder head 24.

It should be noted that, in Fig. 2, reference sign 25 denotes a throttle body connected to an intake port opening into a rear upper portion of the cylinder head 24; reference sign 90L denotes a lower injector for fuel injection mounted to the throttle body 25; and reference sign 40 denotes an air cleaner connected to an upstream end opening into a rear upper portion of the throttle body 25 through a connecting tube 26. It should be also noted that, in the figure, reference sign 27 denotes an exhaust pipe connected to an exhaust port opening into a front portion of the cylinder head 24, the exhaust pipe 27 passing beneath the engine 21 from the front of the engine 21 and extending to the rear of a vehicle body; and reference sign 28 denotes a silencer connected to a downstream end of the exhaust pipe 27.

Furthermore, as shown in Fig. 1, a front stay 34 protruding forward is fixed to a front portion of the head pipe 6. The front stay 34 supports a head light 34a, a wind screen 34b, meters 34c, etc.

It should be noted that, in Fig. 1, reference sign 35 denotes a front fender supported by a bottom bridge 4b of the steering stem 4; reference sign 36 denotes a rear fender extending rearwardly of a seat 33; reference sign 29 denotes a pair of left and right radiators disposed on the left and right sides, respectively, of the down frame 11; reference sign 37 denotes a pair of left and right shrouds disposed forwardly of left and right front tanks 31 for laterally covering the left and right radiators 29, respectively; and reference sign 38 denotes an undercover for covering the engine 21 from the front lower side.

The motorcycle 1 includes the pair of left and right front tanks 31 arranged so as to split into the left and right of the front of the vehicle body, and a rear tank 32 provided inside the rear frame 5b, the front and rear tanks 31 and 32 serving as a fuel tank 30 of the engine 21. The left and right front tanks 31 are provided in such a manner as to straddle vertically the left and right main tubes 8 in side view, lower portions thereof laterally covering the engine 21.

The seat 33 for an occupant is supported on the rear frame 5b. A front end 33a of the seat 33 is disposed between rear upper ends of the left and right front tanks 31 so as to cover them from above. An intake duct 50 for introducing outside air into the air cleaner 40 from the front of the vehicle body is provided inwardly in the vehicle width direction of the upper ends of the left and right front tanks 31.

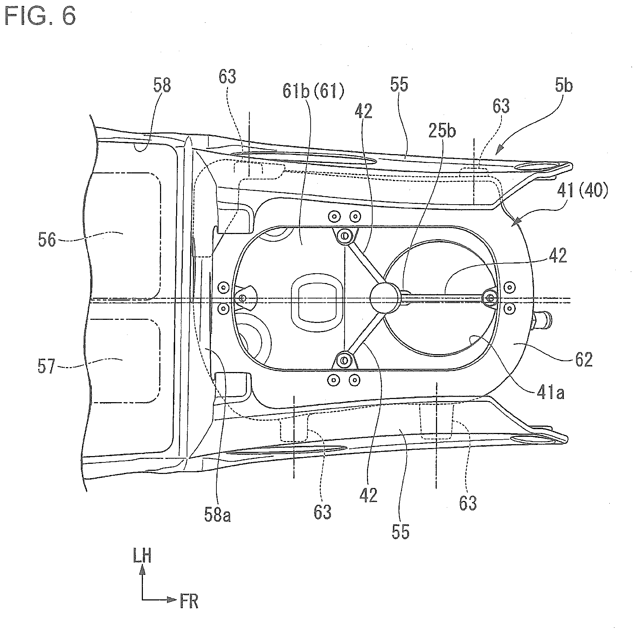

As for the air cleaner 40, as shown in Fig. 2, a cleaner element 45 for purifying air taken from the intake duct 50 or a gap under the seat 33 is mounted to a cleaner case 41. An opening 41a is provided in a lower surface of the cleaner case 41, and an upstream end of the connecting tube 26 is connected to the opening 41a. Furthermore, an upper injector 90U for fuel injection, with a tip portion thereof facing into the connecting tube 26, is mounted through a support rod 42 (see Fig. 6) to the portion in the cleaner case 41 which is downstream of the cleaner element 45. In this embodiment, fuel is injected from the upper injector 90U and the lower injector 90L to the intake side of the engine 21.

It should be noted that, in Fig. 2, reference sign 91 denotes a fuel pump that pressurizes the fuel sucked from the fuel tank 30 (the front tanks 31 and the rear tank 32) to a high pressure to supply it to the upper injector 90U and the lower injector 90L.

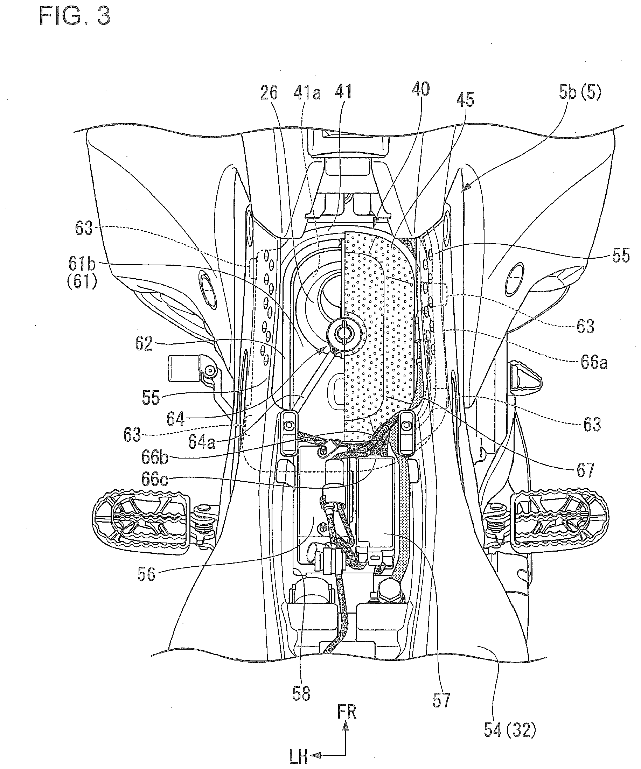

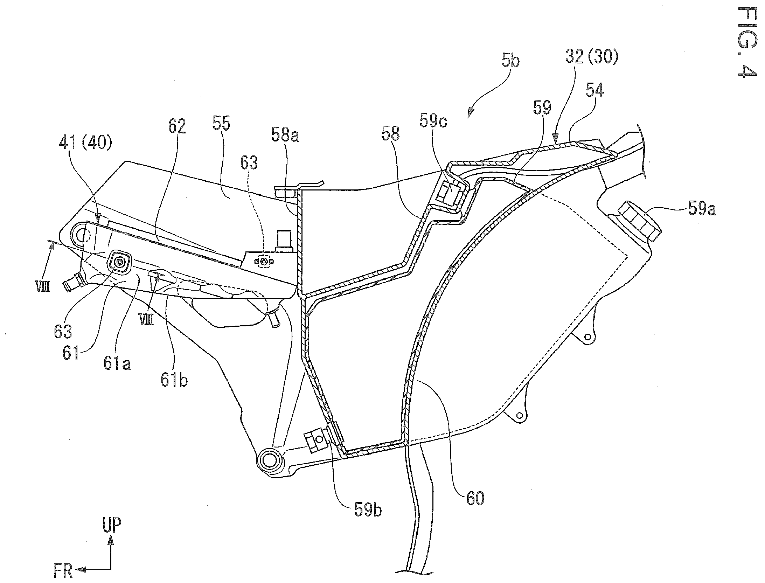

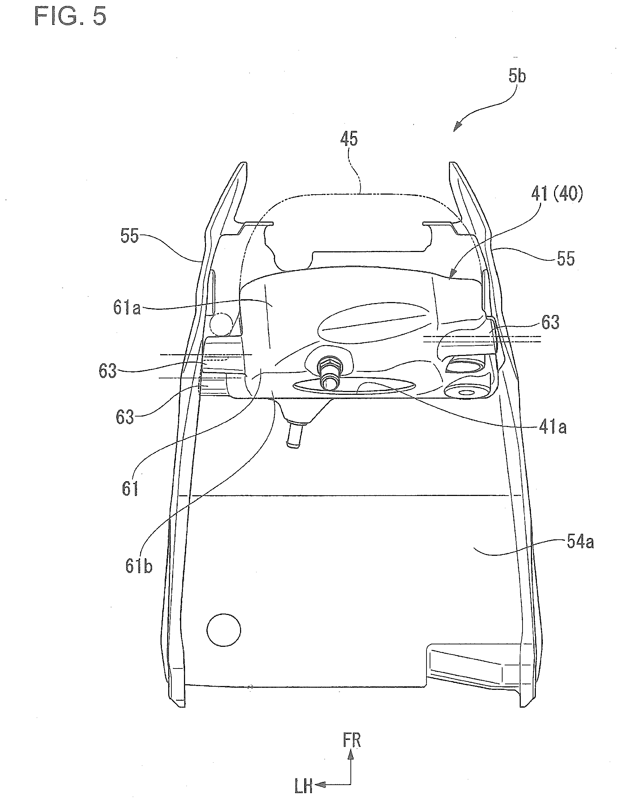

Fig. 3 is a top view, with the seat 33 removed, of a center portion in the longitudinal direction of the motorcycle 1, and Figs. 4 to 6 show the rear frame 5b.

The rear frame 5b is provided, at a front end thereof, with a pair of left and right side walls 55 opposed to each other in the vehicle width direction. A tank storage 54 of the rear tank 32 is continuously provided at the rear of the pair of left and right side walls 55. Also, a storage recess 58 for storing electric components, such as a battery 56, a fuse box 57, and an ECU, is integrally formed at an upper front portion of the tank storage 54.

The pair of left and right side walls 55 and the tank storage 54 are formed integral with each other by carbon fiber reinforced plastic. The above-described air cleaner 40 is disposed within a space which is surrounded by the left and right side walls 55 and a front wall 58a of the storage recess 58. Furthermore, as shown in Fig. 2, the seat 33 for an occupant is disposed over the rear frame 5b so that the storage recess 58 and the air cleaner 40 are covered from above by a lower surface of the seat 33.

The rear tank 32 of this embodiment includes the tank storage 54 that is formed integral with the rear frame 5b and a bladder tank 59 that is disposed within the tank storage 54 for fluid-tightly storing fuel. The bladder tank 59 is a balloon tank formed of an elastic resin, which deforms along the shape of the tank storage 54 in accordance with the amount of the fuel injected. It should be noted that a recess 60 arc-shaped in side view is formed in a central region in the vehicle width direction of a rear lower surface of the tank storage 54, for avoiding interference with the rear wheel 17 on the upstroke. It should be noted that, in Fig. 4, reference sign 59a denotes a filler opening of the bladder tank 59 (the rear tank 32); reference sign 59b denotes a fuel-supply portion of the bladder tank 59 which is connected to the fuel pump 91; and reference sign 59c denotes a breather-tube connection port of the bladder tank 59.

Upper edge portions of the left and right side walls 55 of the rear frame 5b extend longitudinally substantially along the lower edge of a front portion of the seat 33, and lower edge portions of the left and right side walls 55 are inclined upwardly toward the front substantially along the upper edges of rear portions of the main tubes 8. Also, front edge portions of the left and right side walls 55 are formed substantially along rear portions of the front tanks 31.

Furthermore, the cleaner case 41 of the air cleaner 40 is disposed between the left and right side walls 55 as described above, left and right side portions thereof being bolted to the left and right side walls 55, respectively, opposed thereto. In this embodiment, the cleaner case 41 constitutes a coupling block for coupling the left and right side walls 55.

The cleaner case 41 includes: a case body 61 that has a peripheral wall 61a and a bottom wall 61b integrally formed and an opening in an upper portion; and an annular upper wall block 62 that is mounted on the opening in the upper portion of the case body 61. The case body 61 and the upper wall block 62 are formed of carbon fiber reinforced plastic. The bottom wall 61b of the case body 61 is formed into an oval elongated in the longitudinal direction of the vehicle body. The opening 41a for connecting the connecting tube 26 is formed in a front region of the bottom wall 61b. The peripheral wall 61a of the case body 61 is formed circumferentially continuously along the outer peripheral shape of the bottom wall 61b. Two front and rear boss portions 63 are provided in a protruding manner on each of left and right lateral surfaces of the case body 61. Each of the boss portions 63 protrudes toward a corresponding one of the opposed sides of the left and right side walls 55 (i.e., in a direction to face the inner side in the vehicle width direction of the corresponding side wall 55).

It should be noted that in this embodiment, the boss portion 63 disposed in the left rear of the case body 61 is concealed from the outside by the skin of an attachment member on the upper wall block 62. Furthermore, the bottom wall 61b and the upper wall block 62 of the case body 61 are continuous with a lower open end and an upper open end, respectively, of the peripheral wall 61a and extend inwardly of the lower and upper open ends. That is, the bottom wall 61b and the upper wall block 62 are provided continuously with the peripheral wall 61a, thereby enhancing the stiffness of the peripheral wall 61a. In this embodiment, one of the bottom wall 61b and the upper wall block 62 constitutes a first reinforcing wall and the other constitutes a second reinforcing wall.

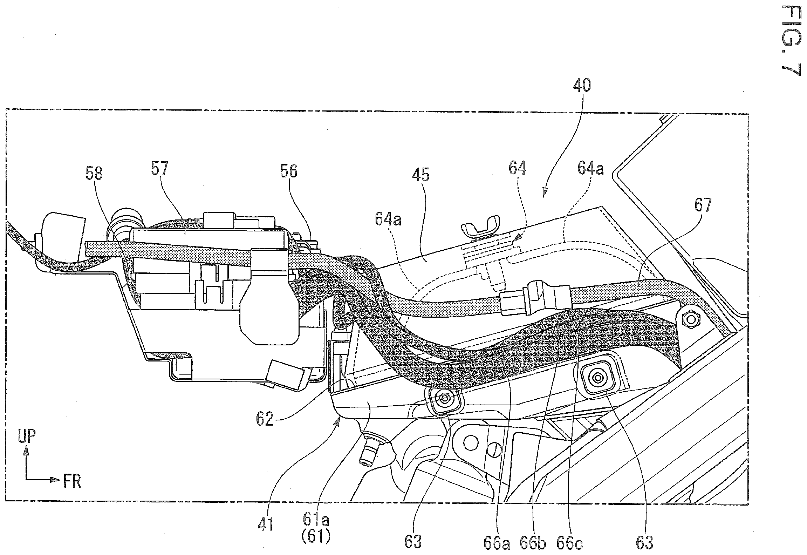

Fig. 7 shows a state of the inside of the rear frame 5b, with the side wall 55 removed.

As shown in the figure, an element holder 64 is mounted to an outer edge of the upper wall block 62 of the cleaner case 41. The element holder 64 includes a plurality of support frames 64a that extend curvedly toward a central upper portion of the upper wall block 62. The bowl-shaped cleaner element 45 made of urethane sponge or the like is mounted on an upper portion of the support frames 64a. The cleaner element 45 is mounted on the support frames 64a in this manner, thereby partitioning the intake system into the upstream dirty side and the downstream clean side.

Further, although its illustration is omitted in the figure, a fire arrestor for blocking the entrance of fire into the cleaner element 45 through the connecting tube 26 from the engine 21 is mounted at a position in the cleaner case 41 downstream from the cleaner element 45.

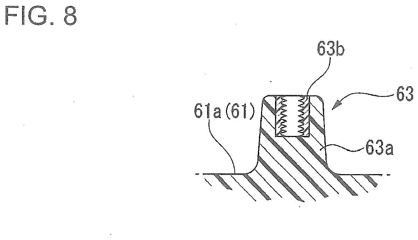

Meanwhile, as shown in Fig. 8, each of the boss portions 63 provided in a protruding manner on the cleaner case 41 includes: a cylindrical wall 63a made of carbon fiber reinforced plastic which is formed integral with the peripheral wall 61a of the cleaner case 41; and a fastening piece 63b made of metal which has a fastening hole 65 (fastening portion) of a bolt for fastening the corresponding side wall 55 and is joined to the inside of the cylindrical wall 63a.

Furthermore, in this embodiment, the left and right boss portions 63 provided in a protruding manner on the peripheral wall 61a of the cleaner case 41 do not have uniform protrusion lengths. As shown in Figs. 3 and 6, the protrusion length of the right boss portion 63 is set longer than that of the left boss portion 63. In addition, as shown in Figs. 3 and 7, harnesses 66a, 66b, and 66c routed from the battery 56 to the front of the vehicle body, and a fuel hose 67 connected between the rear tank 32 and the front tanks 31, are arranged above the right boss portions 63 between the left and right side walls 55 in such a manner as to avoid the cleaner element 45.

Furthermore, the boss portions 63 provided on a protruding manner on the left and right side surfaces of the peripheral wall 61a of the cleaner case 41 are arranged at almost the same level. Moreover, the left and right side walls 55 of the rear frame 5b are bolted, at the front and rear positions thereof with the boss portions 63 of the cleaner case 41 interposed therebetween, to the left and right metal main tubes 8 of the front frame 5a which are symmetrically provided (see the fastening portions 5c in Fig. 1).

As described above, in the body frame structure according to this embodiment, the cleaner case 41 constituting a portion of the rear frame 5b has the annularly continuous peripheral wall 61a and the boss portions 63, each of the boss portions protruding in the direction to face a corresponding one of the left and right side walls 55 from the lateral surface of the peripheral wall 61a. Also, the peripheral wall 61a of the cleaner case 41 is bolted to the left and right side walls 55 at the boss portions 63. Therefore, the left and right side walls 55 are supported by the high-stiffness boss portions 63 and peripheral wall 61a of the cleaner case 41, thereby allowing an increase in the stiffness of the whole rear frame 5b.

Furthermore, in the body frame structure, the left and right side walls 55 of the rear frame 5b can be coupled by the compact component (the cleaner case 41) that has the peripheral wall 61a and the boss portions 63. More specifically, the boss portions 63 of the cleaner case 41 coupling the left and right side walls 55 each have a structure protruding partially toward the corresponding side wall 55 from a portion of the outer surface of the peripheral wall 61a. Thus, the whole cleaner case 41 can be reduced in volume.

Consequently, by adopting this body frame structure, the apparatus for molding the components of the rear frame 5b can be miniaturized and simplified, and product yields can be also increased, resulting in a reduction in product costs.

Moreover, in this embodiment, the upper wall block 62 and the bottom wall 61b, which extend inwardly of the opening of the peripheral wall 61a, are disposed at the upper and lower ends, respectively, of the peripheral wall 61a of the cleaner case 41 serving as the coupling block. Thus, the stiffness of the peripheral wall 61a can be efficiently enhanced by the bottom wall 61b and the upper wall block 62, thereby allowing an increase in the support stiffness of the boss portions 63. Consequently, by adopting this structure, the stiffness of the rear frame 5b can be efficiently enhanced.

Further, in this embodiment, each of the boss portions 63 provided in a protruding manner on the peripheral wall 61a has a structure including: the cylindrical wall 63a that is formed integral with the peripheral wall 61a; and the fastening piece 63b that has the fastening hole 65 and is joined to the inside of the cylindrical wall 63a. Thus, even if the cleaner case 41 is formed to have a thin wall of carbon fiber reinforced plastic, the strength of the boss portion 63 can be sufficiently increased by the cylindrical wall 63a and the fastening piece 63b. Consequently, with this structure, the stiffness of the rear frame 5b can be further enhanced.

Additionally, in this embodiment, the cleaner case 41 of the air cleaner 40 constitutes the coupling block for coupling the left and right side walls 55 of the rear frame 5b. Thus, the cleaner case 41 also serves as a portion of the rear frame 5b, resulting in a reduction in the number of components of the vehicle body.

It should be noted that in the body frame structure according to this embodiment, the left and right side walls 55 of the rear frame 5b are connected to the metal main tubes 8 symmetrically arranged on both sides of the vehicle, and the left and right boss portions 63 protruding toward the side walls 55 from the left and right outer surfaces of the rear frame 5b are arranged at almost the same level. Thus, when a load is applied to the rear frame 5b from the vehicle width direction, the load is input to the left and right boss portions 63 at almost the same level. This makes it less likely that distortion occurs on the left and right side walls 55 even when a load is applied to the rear frame 5b from the vehicle width direction, thereby providing advantage in maintaining the stiffness of the vehicle body.

Further, in the body frame structure according to this embodiment, the left and right side walls 55 are connected to the metal main tubes 8 at the front and rear positions thereof with the boss portions 63 of the cleaner case 41 interposed therebetween. Thus, when a load is applied to the rear frame 5b from the vehicle width direction, the load is input without being biased toward one side of the front and rear boss portions 63. Therefore, distortion becomes less likely to occur on the boss portions 63 and the fastening portions.

Furthermore, in the body frame structure according to this embodiment, the harnesses 66a, 66b, and 66c and the fuel hose 67 are arranged above the boss portions 63 between the left and right side walls 55 in such a manner as to avoid the cleaner element 45. Thus, the dead space above the boss portions 63 between the left and right side walls 55 can be effectively utilized.

In particular, in the body frame structure according to this embodiment, the left and right boss portions 63 provided in a protruding manner on the peripheral wall 61a of the cleaner case 41 do not have uniform lengths. Also, the length of one (in this embodiment, the right boss portion 63) of the left and right boss portions 63 is set longer than that of the other boss portion 63 (in this embodiment, the left boss portion 63). Thus, a large amount of space for arranging the harnesses 66a, 66b, and 66c and the fuel hose 67 on the left and right side walls 55 can be secured.

Consequently, by adopting this structure, the layout of the harnesses 66a, 66b, and 66c and the fuel hose 67 in the rear frame 5b is facilitated.

Although in this embodiment, the harnesses 66a, 66b, and 66c and the fuel hose 67 are arranged above the boss portions 63, only the harnesses 66a, 66b, and 66c or the fuel hose 67 may be arranged above the boss portions 63. Alternatively, any harness or hose other than the harnesses 66a, 66b, and 66c or the fuel hose 67 can be arranged.

It should be understood that the present invention is not limited to the foregoing embodiment, and various changes can be made within the scope of the appended claims. For example, although in this embodiment, the coupling block and the side walls of the rear frame are formed of carbon fiber reinforced plastic, they may be formed of fiber reinforced plastic including the fiber other than carbon fiber.

It should be also understood that examples of the saddle-ride type vehicle in this specification include general vehicles in which a rider sits astride a vehicle body, and include not only motorcycles (including motor-assisted bicycles and scooter-type vehicles), but also three-wheeled vehicles (including vehicles having one wheel in front and two in the rear, as well as vehicles having two wheels in front and one in the rear) or four-wheeled vehicles.

It is the object of the invention to provide a body frame structure for a saddle-ride type vehicle which allows miniaturization and simplification of molding apparatus and also allows a reduction in product costs by increasing product yields.

A cleaner case 41 made of fiber-reinforced plastic couples left and right side walls 55 of a rear frame 5b. The cleaner case 41 has an annularly continuous peripheral wall 61a and boss portions 63, each of the boss portions 63 protruding toward a corresponding one of opposed sides of the pair of side walls 55 from an outer surface of the peripheral wall 61a. The cleaner case 41 is fastened to the pair of side walls 55 at the boss portions 63.

## Claims

1. A body frame structure for a saddle-ride type vehicle, comprising: a pair of side walls (55) that are opposed to each other in a vehicle width direction; and a coupling block (41) that couples the pair of side walls (55), the pair of side walls (55) and the coupling block (41) being formed of fiber-reinforced plastic,
**characterized in that**
the coupling block (41) is a cleaner case (41) that has an annularly continuous peripheral wall (61a) and boss portions (63), each of the boss portions (63) protruding toward a corresponding one of opposed surfaces of the pair of side walls (55) from an outer surface of the peripheral wall (61a); and
the cleaner case (41) is fastened to the pair of side walls (55) at the boss portions (63).

2. The body frame structure for the saddle-ride type vehicle according to Claim 1, wherein the cleaner case (41) has a first reinforcing wall (61b, 62) that extends inwardly of an opening from one open end of the peripheral wall (61a).

3. The body frame structure for the saddle-ride type vehicle according to Claim 2, wherein the cleaner case (41) has a second reinforcing wall (62, 61b) that extends inwardly of an opening from the other open end of the peripheral wall (61a).

4. The body frame structure for the saddle-ride type vehicle according to any one of Claims 1 to 3, wherein each of the boss portions (63) includes: a cylindrical wall (63a) that is formed integral with the peripheral wall (61a); and a fastening piece (63b) that has a fastening portion (65) for fastening the corresponding side wall (55) and is joined to an inside of the cylindrical wall (63a).

5. The body frame structure for the saddle-ride type vehicle according to any one of Claims 1 to 4, wherein the cleaner case (41) holds a cleaner element (45) of an air cleaner (40).

6. The body frame structure for the saddle-ride type vehicle according to any one of Claims 1 to 5, wherein:
metal frames (8) are symmetrically provided on both sides in the vehicle width direction of a vehicle body;
the pair of side walls (55) are connected to the symmetrical metal frames (8); and
the left and right boss portions (63), each protruding toward the corresponding one of the opposed sides of the pair of side walls (55) from the outer surface of the peripheral wall (61a), are arranged at almost the same level.

7. The body frame structure for the saddle-ride type vehicle according to Claim 6, wherein the pair of side walls (55) are connected to the metal frames (8) at front and rear positions thereof with the boss portions (63) of the cleaner case (41) interposed therebetween.

8. The body frame structure for the saddle-ride type vehicle according to any one of Claims 1 to 7, wherein at least either of harnesses (66a, 66b, and 66c) and a hose (67) that are arranged substantially along the longitudinal direction of the vehicle body is disposed above the boss portions (63) between the pair of side walls (55).

## Patentansprüche

1. Rumpfrahmenstruktur für ein Aufsitzsattel-Fahrzeug, welche aufweist: ein Paar von Seitenwänden (55), die in Fahrzeugbreitenrichtung einander gegenüberliegen; sowie einen Verbindungsblock (41), der das Paar von Seitenwänden (55) verbindet, wobei das Paar von Seitenwänden (55) und der Verbindungsblock (41) aus faserverstärktem Kunststoff gebildet sind, **dadurch gekennzeichnet, dass**
der Verbindungsblock (41) ein Filtergehäuse (41) ist, das eine ringförmig durchgehende Umfangswand (61a) und Nabenabschnitte (63) aufweist, wobei jeder der Nabenabschnitte von einer Außenoberfläche der Umfangswand (61a) zu einer entsprechenden gegenüberliegenden Oberfläche des Paars von Seitenwänden (55) vorsteht; und
das Filtergehäuse (41) an den Nabenabschnitten (63) an dem Paar von Seitenwänden (55) befestigt ist.

2. Die Rumpfrahmenstruktur für das Aufsitzsattel-Fahrzeug nach Anspruch 1, wobei das Filtergehäuse (41) eine erste Verstärkungswand (61b, 62) aufweist, die sich einwärts einer Öffnung von einem offenen Ende der Umfangswand (61a) erstreckt.

3. Die Rumpfrahmenstruktur für das Aufsitzsattel-Fahrzeug nach Anspruch 2, wobei das Filtergehäuse (41) eine zweite Verstärkungswand (62, 61b) aufweist, die sich einwärts einer Öffnung von dem anderen offenen Ende der Umfangswand (61a) erstreckt.

4. Die Rumpfrahmenstruktur für das Aufsitzsattel-Fahrzeug nach einem der Ansprüche 1 bis 3, wobei jeder der Nabenabschnitte (63) enthält: eine zylindrische Wand (63a), die integriert mit der Umfangswand (61a) ausgebildet ist; sowie ein Befestigungsstück (63b) das einen Befestigungsabschnitt (65) zum Befestigen der entsprechenden Seitenwand (55) aufweist und mit einer Innenseite der zylindrischen Wand (63a) verbunden ist.

5. Die Rumpfrahmenstruktur für das Aufsitzsattel-Fahrzeug nach einem der Ansprüche 1 bis 4, wobei das Filtergehäuse (41) ein Filterelement (45) eines Luftfilters (40) hält.

6. Die Rumpfrahmenstruktur für das Aufsitzsattel-Fahrzeug nach einem der Ansprüche 1 bis 5, wobei:
Metallrahmen (8) symmetrisch an beiden Seiten in der Fahrzeugbreitenrichtung eines Fahrzeugkörpers vorgesehen sind;
das Paar von Seitenwänden (55) mit den symmetrischen Metallrahmen (8) verbunden ist; und
die linken und rechten Nabenabschnitte (63), die jeweils von der Außenoberfläche der Umfangswand (61a) zu der einen entsprechenden gegenüberliegenden Seite des Paars von Seitenwänden (55) vorstehen, angenähert auf der gleichen Höhe angeordnet sind.

7. Die Rumpfrahmenstruktur für das Aufsitzsattel-Fahrzeug nach Anspruch 6, wobei das Paar von Seitenwänden (55) mit den Metallrahmen (8) an dessen vorderen und hinteren Positionen mit den dazwischen angeordneten Nabenabschnitten (63) des Filtergehäuses (41) verbunden ist.

8. Die Rumpfrahmenstruktur für das Aufsitzsattel-Fahrzeug nach einem der Ansprüche 1 bis 7, wobei Kabel (66a, 66b und 66c) und/oder ein Schlauch (67), die im Wesentlichen entlang der Längsrichtung des Fahrzeugkörpers angeordnet sind, über den Nabenabschnitten (63) zwischen dem Paar von Seitenwänden (55) angeordnet ist.

## Revendications

1. Structure de châssis de véhicule de type à selle, comprenant : une paire de parois latérales (55) qui sont opposées l'une à l'autre dans un sens de la largeur de véhicule ; et un bloc de couplage (41) qui couple la paire de parois latérales (55), la paire de parois latérales (55) et le bloc de couplage (41) étant formés de plastique renforcé de fibres,
**caractérisé en ce que**
le bloc de couplage (41) est un boîtier de filtre (41) qui a une paroi périphérique continue annulaire (61a) et des parties de bossage (63), chacune des parties de bossage (63) étant protubérante vers une correspondante des surfaces opposées de la paire de parois latérales (55) depuis une surface extérieure de la paroi périphérique (61a) ; et
le boîtier de filtre (41) est fixé à la paire de parois latérales (55) au niveau des parties de bossage (63) .

2. Structure de châssis de véhicule de type à selle selon la revendication 1, dans laquelle le boîtier de filtre (41) a une première paroi de renforcement (61b, 62) qui s'étend vers l'intérieur par rapport à une ouverture depuis une extrémité ouverte de la paroi périphérique (61a).

3. Structure de châssis de véhicule de type à selle selon la revendication 2, dans laquelle le boîtier de filtre (41) a une seconde paroi de renforcement (62, 61b) qui s'étend vers l'intérieur par rapport à une ouverture depuis l'autre extrémité ouverte de la paroi périphérique (61a).

4. Structure de châssis de véhicule de type à selle selon l'une quelconque des revendications 1 à 3, dans laquelle chacune des parties de bossage (63) comporte : une paroi cylindrique (63a) qui est formée de manière solidaire avec la paroi périphérique (61a) ; et une pièce de fixation (63b) qui a une partie de fixation (65) pour fixer la paroi latérale correspondante (55) et est liée à un intérieur de la paroi cylindrique (63a).

5. Structure de châssis de véhicule de type à selle selon l'une quelconque des revendications 1 à 4, dans laquelle le boîtier de filtre (41) contient un élément filtre (45) d'un filtre à air (40).

6. Structure de châssis de véhicule de type à selle selon l'une quelconque des revendications 1 à 5, dans laquelle :
des cadres en métal (8) sont symétriquement fournis sur les deux côtés dans le sens de la largeur de véhicule d'une carrosserie de véhicule ;
la paire de parois latérales (55) est connectée aux cadres en métal symétriques (8) ; et
les parties de bossage gauche et droite (63), chacune étant protubérante vers celui correspondant des côtés opposés de la paire de parois latérales (55) depuis la surface extérieure de la paroi périphérique (61a), sont agencées presqu'au même niveau.

7. Structure de châssis de véhicule de type à selle selon la revendication 6, dans laquelle la paire de parois latérales (55) est connectée aux cadres en métal (8) à des positions avant et arrière de ceux-ci avec les parties de bossage (63) du boîtier de filtre (41) interposées entre ceux-ci.

8. Structure de châssis de véhicule de type à selle selon l'une quelconque des revendications 1 à 7, dans laquelle au moins l'un ou l'autre parmi des faisceaux (66a, 66b et 66c) et un flexible (67) qui sont agencés sensiblement le long du sens longitudinal de la carrosserie de véhicule est disposé au-dessus des parties de bossage (63) entre la paire de parois latérales (55).
